# EUROPÄISCHE PATENTANMELDUNG

(11) **EP 4 521 616 A1**
(43) Veröffentlichungstag der Anmeldung: **12.03.2025**
(21) Anmeldenummer: 23196368.7
(22) Anmeldetag: 08.09.2023
(51) Int. Cl.: H02K 15/06

(54) **VERFAHREN UND VORRICHTUNG ZUM FÜGEN EINER SPULENMATTE AUF EINEN STATOR EINES AUSSENLÄUFERMOTORS**

(71) Anmelder: Grob-Werke GmbH & Co. KG, 87719 Mindelheim (DE)
(72) Erfinder: Schmölz, Markus, 87668 Rieden (DE); Ziegler, Manfred, 86856 Hiltenfingen (DE); Ansorge, Johannes, 87785 Winterrieden (DE)
(74) Vertreter: KASTEL Patentanwälte PartG mbB

(57) **Zusammenfassung**

Zur Verbesserung der Prozesssicherheit in der industriellen Großserienfertigung von Statoren für Außenläufermotoren schafft die Erfindung ein Fügeverfahren zum Fügen einer Spulenmatte (12) auf den Stator (14) eines Außenläufermotors, umfassend:
a) Bereitstellen einer Spulenmatte (12) mit durch Wicklungsköpfe (16) verbundenen geradlinigen Drahtabschnitten (18),
b) Bereitstellen eines Stators (14) mit radial nach außen öffnenden Statornuten (20),
c) Aufrollen der Spulenmatte (12) auf einen Wicklungsträger (22), der radial nach außen öffnende Wicklungsträger-Aufnahmenuten (24) aufweist
d) Überführen der Spulenmatte (12) von dem Wicklungsträger (22) auf ein Übergabewerkzeug (26), das radial nach innen öffnende Übergabewerkzeug-Aufnahmenuten (28) aufweist, und
e) Überführen der Spulenmatte (12) von dem Übergabewerkzeug (26) auf den Stator (14). Außerdem werden eine Fügevorrichtung (10), eine Steuerung (40) und ein Computerprogramm zum Durchführen des Fügeverfahrens beschrieben.

## Beschreibung

Die Erfindung betrifft ein Fügeverfahren zum Fügen einer Spulenmatte auf einen Stator eines Außenläufermotors. Weiter betrifft die Erfindung eine Fügevorrichtung zum Fügen einer Spulenmatte, die durch Wicklungsköpfe verbundene geradlinige Drahtabschnitte aufweist, in nach außen öffnende Statornuten eines Stators eines Außenläufermotors. Weiter betrifft die Erfindung eine (elektronische) Steuerung und ein Computerprogramm für eine solche Fügevorrichtung.

Zum technologischen Hintergrund und zum Stand der Technik wird auf folgende Literaturstellen verwiesen:
[1] WO 2019/098949 A1
[2] WO 2019/020148 A1
[3] WO 2019/166060 A1
[4] WO 2019/114570 A1
[5] WO 2017/102981 A1
[6] DE 10 2019 106 711 A1
[7] EP 3 886 303 B1
[8] WO 2018/019970 A1

Aus [1] ist ein Verfahren zum Herstellen eines Stators eines Außenläufermotors bekannt, bei dem ein Stator mit radial nach außen öffnenden Statornuten bereitgestellt wird und ein wellenförmig oder mäanderförmig gebogener Draht zum Bilden einer Wellenwicklung tangential zu dem Stator zugeführt wird und auf ein Blechpaket des Stators gewickelt wird. Somit wird ein wellenförmiger Draht in einem Aufrollprozess direkt in den Stator gefügt.

Dieses Verfahren ist gegenüber früheren Verfahren zum Herstellen von Statoren von Außenläufermotoren, bei denen Drähte um Zähne des Stators gewickelt werden, hinsichtlich der Prozesszeit und der Automatisierbarkeit wesentlich verbessert.

Ausgehend von [1] hat sich die Erfindung zur Aufgabe gestellt, verbesserte Verfahren und Vorrichtungen zum Fügen einer Spulenwicklung auf einen Stator eines Außenläufermotors zur Verfügung zu stellen.

Zum Lösen dieser Aufgabe schafft die Erfindung ein Fügeverfahren und eine Fügevorrichtung gemäß den unabhängigen Ansprüchen. Weiter werden eine Steuerung und ein Computerprogramm für eine derartige Fügevorrichtung vorgeschlagen.

Vorteilhafte Ausgestaltungen sind Gegenstand der Unteransprüche.

Die Erfindung schafft gemäß einem Aspekt davon ein Fügeverfahren zum Fügen einer Spulenmatte auf einen Stator eines Außenläufermotors, umfassend:
a) Bereitstellen einer Spulenmatte mit durch Wicklungsköpfe verbundenen geradlinigen Drahtabschnitten,
b) Bereitstellen eines Stators mit radial nach außen öffnenden Statornuten,
c) Aufrollen der Spulenmatte auf einen Wicklungsträger, der radial nach außen öffnende Wicklungsträger-Aufnahmenuten aufweist, in die die geradlinigen Drahtabschnitte eingefügt werden,
d) Überführen der Spulenmatte von dem Wicklungsträger auf ein Übergabewerkzeug, das radial nach innen öffnende Übergabewerkzeug-Aufnahmenuten aufweist, wobei die Wicklungsträger-Aufnahmenuten mit den Übergabewerkzeug-Aufnahmenuten ausgerichtet werden und die geradlinigen Drahtabschnitte von den Wicklungsträger-Aufnahmenuten in die Übergabewerkzeug-Aufnahmenuten überführt werden, und
e) Überführen der Spulenmatte von dem Übergabewerkzeug auf den Stator, wobei die Übergabewerkzeug-Aufnahmenuten mit den Statornuten ausgerichtet werden und die geradlinigen Drahtabschnitte von den Übergabewerkzeug-Aufnahmenuten radial nach innen in die Statornuten überführt werden.

Vorzugsweise umfasst Schritt a) den Schritt:
a1) Biegen von Drähten mit im Wesentlichen rechteckigem Querschnitt und einer äußeren Isolierschicht zu Wellenwicklungsdrähten.

Vorzugsweise umfasst Schritt a) den Schritt:
a2) Zusammenfügen mehrerer Wellenwicklungsdrähte, welche mäanderförmig mit geradlinigen Drahtabschnitten und in unterschiedlichen Richtungen gebogenen Wicklungsköpfe dazwischen ausgebildet sind.

Vorzugsweise umfasst Schritt a) den Schritt:
a3) Herstellen der Spulenmatte durch Wickeln, Stapeln, Flechten oder Stecken mehrerer Drähte.

Vorzugsweise umfasst Schritt a) den Schritt:
a4) Bereitstellen der Spulenmatte auf einer sich länglich erstreckenden Halterung, die eine Reihe von Zähnen mit Zahnlücken dazwischen aufweist, so dass die geradlinige Drahtabschnitte der Spulenmatte in den Zahnlücken aufgenommen sind.

Vorzugsweise umfasst Schritt b) den Schritt:
b1) Bereitstellen eines Blechpakets mit radial nach außen öffnenden Statornuten.

Vorzugsweise umfasst Schritt b) den Schritt:
b2) Auskleiden der Statornuten mit einer Nutisolierung.

Vorzugsweise umfasst Schritt b) den Schritt:
b3) Einfügen von Isolationspapieren in die Statornuten.

Vorzugsweise umfasst Schritt b) den Schritt:
b4) Überdecken von Nutkanten mit Z-förmig oder Omega-förmig geformten Nutisolierungen.

Vorzugsweise umfasst Schritt c) den Schritt:
c1) Bereitstellen des Wicklungsträgers mit einem Durchmesser, der gleich oder größer als der Durchmesser des Stators ist.

Der Begriff "gleich" ist in Schritt c1) und im weiter unten erläuterten Schritt c6) im Sinne von "im Wesentlichen gleich" zu verstehen; Durchmesser, die gering (z.B. 10%) voneinander abweichen, sind immer noch als "gleich" in diesem Sinne zu verstehen.

Vorzugsweise umfasst Schritt c) den Schritt:
c2) Bereitstellen des Wicklungsträgers mit radial bewegbaren Ausstoßelementen zum radial Ausstoßen der Spulenmatte aus den Wicklungsträger-Aufnahmenuten.

Vorzugsweise umfasst Schritt c) den Schritt:
c3) Bereitstellen einer Anordnung von radial beweglichen Stützfingern axial benachbart zu Nutbegrenzungen der Wicklungsträger-Aufnahmenuten.

Vorzugsweise umfasst Schritt c) den Schritt:
c4) Bereitstellen des Wicklungsträgers mit radial beweglichen Wicklungsträger-Nutbegrenzungselementen.

Vorzugsweise umfasst Schritt c) den Schritt:
c5) Aufnehmen der Spulenmatte von einer sich linear erstreckenden Halterung unter Drehen des Wicklungsträgers und relativem linearen Bewegen von Wicklungsträger und Halterung.

Vorzugsweise umfasst Schritt c) den Schritt:
c6) Aufrollen der Spulenmatte mit einem Aufrolldurchmesser, der gleich oder größer als der Spulendurchmesser der später in den Stator eingefügten Spulenmatte ist, auf den Wicklungsträger.

Vorzugsweise umfasst Schritt d) den Schritt:
d1) Bereitstellen des Übergabewerkzeugs mit einer ringförmigen Anordnung von radial unbeweglichen oder radial beweglichen Übergabewerkzeug-Nutbegrenzungselementen.

Vorzugsweise umfasst Schritt d) den Schritt:
d2) Bereitstellen von radial beweglichen Stützfingern axial benachbart zu Nutbegrenzungen der Übergabewerkzeug-Aufnahmenuten.

Vorzugsweise umfasst Schritt d) den Schritt:
d3) radiales Bewegen der geradlinigen Drahtabschnitte aus den Wicklungsträger-Aufnahmenuten in die Übergabewerkzeug-Aufnahmenuten.

Vorzugsweise umfasst Schritt d) den Schritt:
d4) radiales Expandieren der Spulenmatte beim Überführen vom Wicklungsträger auf das Übergabewerkzeug mittels radial nach außen bewegter Ausstoßelemente.

Vorzugsweise umfasst Schritt d) den Schritt:
d5) Übergeben der Spulenmatte unter Beibehaltung der Spulenmattenform und/oder des Spulenmattendurchmessers durch radiales Bewegen von Nutbegrenzungselementen des Wicklungsträgers und des Übergabewerkzeugs.

Vorzugsweise umfasst Schritt d) den Schritt:
d6) Stützen und/oder Führen der Spulenmatte beim Überführen mittels radial zustellbarer Stützfinger.

Vorzugsweise umfasst Schritt d) den Schritt:
d7) Halten der Spulenmatte an den Wickelköpfen beim Überführen.

Vorzugsweise umfasst Schritt e) den Schritt:
e1) radiales Komprimieren der Spulenmatte beim Überführen auf den Stator.

Vorzugsweise umfasst Schritt e) den Schritt:
e2) Führen der Spulenmatte beim Überführen mittels Stützfingern.

Vorzugsweise umfasst Schritt e) den Schritt:
e3) Festhalten von Nutisolierungen beim Überführen der Spulenmatte auf den Stator.

Vorzugsweise umfasst Schritt e) den Schritt:
e4) Festklemmen von Nutisolierungen mittels Stützfinger.

Vorzugsweise umfasst Schritt e) den Schritt:
e5) Festhalten von Nutisolierungen mittels radialer Nutbegrenzungselemente des Übergabewerkzeugs.

Vorzugsweise folgt auf Schritt e3), e4) und/oder e5) der Schritt e6) Freigeben der Nutisolierungen während des Prozesses, insbesondere während eines Einfügen der geradlinigen Drahtabschnitte, um so ein Überführen der Nutisolierungen zusammen mit den geradlinigen Drahtabschnitte bis auf den Grund der Nuten zu ermöglichen.

Gemäß einem weiteren Aspekt schafft die Erfindung eine Fügevorrichtung zum Fügen einer Spulenmatte, die durch Wicklungsköpfe verbundene geradlinige Drahtabschnitte aufweist, in nach außen öffnende Statornuten eines Stators eines Außenläufermotors, mit:
einem Wicklungsträger, der eine ringförmige Anordnung radial nach außen öffnender Wicklungsträger-Aufnahmenuten aufweist und auf den die Spulenmatte unter Einfügen der geradlinigen Drahtabschnitte in die Wicklungsträger-Aufnahmenuten aufrollbar ist;
   und
einem Übergabewerkzeug, das eine ringförmige Anordnung nach innen öffnender Übergabewerkzeug-Aufnahmenuten aufweist und das dazu eingerichtet ist, die Spulenmatte von dem Wicklungsträger aufzunehmen und auf den Stator zu übergeben.

Bevorzugt hat die Fügevorrichtung weiter
eine geradlinige Halterung mit wenigstens einer Reihe von Zähnen zum Bereitstellen der Spulenmatte und
eine Aufrolleinrichtung zum Drehen des Wicklungsträgers und zum relativen Bewegen von Wicklungsträger und Halterung zum Aufrollen der Spulenmatte auf den Wicklungsträger.

Es ist bevorzugt, dass der Wicklungsträger radial feststehende oder radial bewegliche Wicklungsträger-Nutbegrenzungselemente aufweist.

Es ist bevorzugt, dass der Wicklungsträger radial bewegliche Ausstoßelemente zum radialen Ausstoßen der Spulenmatte zum Überführen auf das Übergabewerkzeug aufweist.

Es ist bevorzugt, dass der Wicklungsträger an einer Wicklungsträger-Handlingseinrichtung gehalten ist, die dazu eingerichtet ist, den Wicklungsträger mit aufgerollter Spule in das Übergabewerkzeug einzuführen und die Aufnahmenuten des Wicklungsträgers und des Übergabewerkzeugs miteinander zum Überführen der Spulenmatte auszurichten.

Es ist bevorzugt, dass das Übergabewerkzeug radial feststehende oder radial bewegliche Übergabewerkzeug-Nutbegrenzungselemente aufweist.

Es ist bevorzugt, dass das Übergabewerkzeug an einer Übergabewerkzeug-Handlingseinrichtung gehalten ist, die dazu eingerichtet ist, das Übergabewerkzeug mit dem Wicklungsträger und dem Stator zur jeweiligen Übergabe der Spulenmatte auszurichten.

Bei einigen Ausführungsformen hat die Fügevorrichtung wenigstens eine ringförmige Anordnung von radial beweglichen Stützfingern zum Stützen und/oder Führen der Spulenmatte beim Überführen von dem Wicklungsträger auf das Übergabewerkzeug und/oder beim Überführen von dem Übergabewerkzeug auf den Stator.

Es ist bevorzugt, dass die Anordnung von Stützfingern dazu eingerichtet ist, beim Überführen der Spulenmatte von dem Übergabewerkzeug auf den Stator in Statornuten eingefügte Nutisolierungen am Stator festzuklemmen.

Vorzugsweise hat die Fügevorrichtung eine Steuerung mit wenigstens einem Prozessor und wenigstens einem Speicher, die dazu eingerichtet ist, die Fügevorrichtung zum Durchführen des Fügeverfahrens nach einer der voranstehenden Ausgestaltungen anzusteuern.

Gemäß einem weiteren Aspekt schafft die Erfindung eine Steuerung für eine Fügevorrichtung nach einer der voranstehenden Ausführungsformen, wobei die Steuerung dazu eingerichtet ist, die Fügevorrichtung zum Durchführen des Fügeverfahrens nach einer der voranstehenden Ausgestaltungen anzusteuern.

Gemäß einem weiteren Aspekt schafft die Erfindung ein Computerprogramm mit Anweisungen, die eine Fügevorrichtung nach einer der voranstehenden Ausführungsformen dazu veranlassen, das Fügeverfahren nach einer der voranstehenden Ausgestaltungen durchzuführen.

Bevorzugte Ausführungsformen von Fügeverfahren und Fügevorrichtungen sind für die industrielle Großserienfertigung von Statoren von Außenläufermotoren eingerichtet. Sie zeichnen sich wie bei [1] durch geringe Prozesszeiten und gute Automatisierbarkeit aus.

Ein Außenläufermotor (auch kurz Außenläufer genannt) ist eine Bauform von rotierenden elektrischen Maschinen, bei der sich der ruhende Teil (Stator) der Maschine in ihrem Innern befindet und vom bewegten Teil (Rotor, "Läufer") umschlossen ist. Die Maschine kann je nach Betriebspunkt und Ausführung als elektrischer Generator oder als Elektromotor verwendet werden. Bevorzugte Verwendung der mit Verfahren und Vorrichtungen gemäß bevorzugten Ausführungsformen der Erfindung herstellbaren Außenläufermotoren ist die Elektromobilität. Zum Beispiel sollen Außenläufermotoren in industrieller Großserie hergestellt werden, die als Traktionsmotor oder Fahrantrieb für elektrisch betriebene Fahrzeuge (z.B. batterieelektrische Fahrzeuge, Hybridfahrzeuge oder Fahrzeuge mit Brennstoffzelle), wie insbesondere Personenkraftwagen oder Lastkraftwagen eingesetzt werden sollen. Außenläufermotoren können beispielsweise als Radnabenmotoren für einen Direktantrieb eingesetzt werden.

Insbesondere sollen Außenläufermotoren mit hoher Leistung hergestellt werden. Hierzu sind Spulenwicklungen aus Drähten mit rechteckigem Querschnitt besonders vorteilhaft, um einen hohen Füllgrad zu erzielen.

Bevorzugte Ausführungsformen sind zur Statorfertigung mit Wellenwicklung ausgebildet. Bei dieser - für Statoren von Innenläufermotoren grundsätzlich bekannten - Technologie wird wenigstens eine (außerhalb des Stators) vorgefertigte Drahtmatte - hier Spulenmatte genannt - in den Stator gefügt. Unter einer "Spulenmatte" wird ein mattenförmiges Gebilde aus wellenförmigen Drähten verstanden. Eine Spulenmatten hat eine Vielzahl von geradlinigen Drahtabschnitten, die durch dachförmig gebogene Drahtabschnitte - Wicklungsköpfe miteinander verbunden sind. Derartige Spulenmatten lassen sich auf unterschiedliche Weisen vorfertigen, wie z.B. Schwertwicklung, Stapeln oder Stecken. Herstellmethoden für die Spulenmatten sind beispielsweise aus den Literaturstellen [2] und [3] sowie den in [2] und [3] zitierten Literaturstellen bekannt und im Einzelnen beschrieben.

Wie in [1] beschrieben, liegt es für die Fertigung von Statoren für Außenläufermotoren auf der Hand, vorgefertigte Spulenwicklungen, wie einzelne Wellenwicklungsdrähte, unmittelbar auf die Anordnung nach außen öffnender Nuten eines Blechpakets eines Außenläufer-Stators aufzubringen. Dabei ist es üblich, die Nuten zuvor mit Isolationspapier zu versehen.

Im Detail ergeben sich bei dieser Technologie jedoch Schwierigkeiten wie insbesondere das Risiko von Beschädigungen von Draht und/oder Nut-Isolationspapier. Aufgrund der geometrischen Bedingungen können während eines direkten Aufrollens von Wellenwicklungsdrähten die Drähte oder Isolierungen nicht oder nur mit hohem Aufwand geschützt werden. Insbesondere können die scharfen Kanten des Blechpakets sehr leicht den Draht - insbesondere dessen äußere Isolierschicht - beschädigen. Zudem kann der Draht das Papier in die Nut verdrängen und beschädigen.

Bevorzugte Ausführungsformen von Fügeverfahren und Fügevorrichtungen gemäß der Erfindung sind gegenüber dem Stand der Technik nach [1] noch weiter hinsichtlich Prozesssicherheit, Verringerung von Ausschuss und/oder Verringerungen von Beschädigungen an der Spulenwicklung verbessert.

Bevorzugte Ausführungsformen der Erfindung betreffen eine Fertigung eines Stators für einen Außenläufer(motor) mit Wellenwicklung. Bei dem Konzept der Wellenwicklung werden sogenannte Wickelmatten (hier Spulenmatten genannt) hergestellt und anschließend in das Blechpaket eingeführt.

Bevorzugte Ausführungsformen betreffen ein Konzept für eine Serienanlage bei Außenläufer-Statoren.

Bevorzugte Ausführungsformen schaffen eine Möglichkeit (Verfahren oder Vorrichtung), um die Wicklungen (in Form einer vorgefertigten Wellenwicklung oder Spulenmatte) möglichst ohne Beschädigungen oder zumindest mit einer verringerten Gefahr von Beschädigungen auf den Stator zu fügen.

Bei einem vorteilhaften Ablauf gemäß Ausführungsformen der Erfindung und in Kombination mit einem Übergabewerkzeug können Bauteilbeschädigungen beim Außenläufer auf ein Minimum reduziert werden, und es können - auf dem Gebiet der Herstellung von Statoren für Innenläufer(motoren) - bewährte Prozesse verwendet werden.

Einige Ausführungsformen des Verfahrens weisen die folgende Reihenfolge von Schritten auf:
Schritt 1:
   Die Drähte/Wicklungen werden auf einen Wicklungsträger aufgewickelt (wie bei einem Innenläufer). Bei einigen Ausführungsformen kann (kein MUSS) der Durchmesser hierbei dem Statordurchmesser entsprechen.
Schritt 2:
   Von diesem Wicklungsträger werden die Drähte auf ein spezielles Übergabewerkzeug überführt (expandiert)
Schritt 3:
   Die Drähte werden von dem Übergabewerkzeug radial auf den Stator gefügt (komprimiert).

Es können einfacher Elemente eingebracht werden, um die Bauteile zu schützen. Somit werden Beschädigungen reduziert.

Andere Ausführungsformen des Verfahrens weisen die folgende Reihenfolge von Schritten auf:
Schritt 1:
   Die Drähte/Wicklungen werden auf einen Wicklungsträger aufgewickelt (wie bei einem Innenläufer). Der (Aufroll-)Durchmesser ist hierbei größer als der Stator-Durchmesser, sodass ein zusätzliches Expandieren an ein Übergabewerkzeug nicht notwendig ist.
Schritt 2:
   Von diesem Wicklungsträger werden die Drähte an ein spezielles Übergabewerkzeug übergeben (ohne Drahtverformung).
Schritt 3:
   Die Drähte werden von dem Übergabewerkzeug radial auf den Stator gefügt (komprimiert).

Es können einfacher Elemente eingebracht werden, um die Bauteile zu schützen. Somit werden Beschädigungen reduziert. Zudem wird die nötige Verformung der Drähte auf ein Minimum reduziert.

Ausführungsbeispiele der Erfindung werden im Folgenden anhand der beigefügten Zeichnungen näher erläutert. Darin zeigt:
- Fig. 1: eine vereinfachte schematische Ansicht eines Ausführungsbeispiels einer Spulenmatte;
- Fig. 2: eine vereinfachte schematische Blockansicht einer Fügevorrichtung zum Fügen der Spulenmatte auf einen Stator eines Außenläufers;
- Fig. 3: eine schematische Seitenansicht (in axialer Richtung) eines Wicklungsträgers der Fügevorrichtung gemäß einer ersten Ausführungsform;
- Fig. 4: eine vergrößerte Detailansicht eines Teilbereichs des Wicklungsträgers von Fig. 3;
- Fig. 5: eine schematische Seitenansicht (in axialer Richtung) eines Übergabewerkzeugs der Fügevorrichtung gemäß einer ersten Ausführungsform;
- Fig. 6: eine schematische Seitenansicht (in axialer Richtung) eines Ausführungsbeispiels eines Stators eines Außenläufers, auf den Wicklungen/Drähte mit Hilfe des Übergabewerkzeugs gemäß Fig. 5 oder gemäß Fig. 22 eingefügt worden sind;
- Fig. 7: eine perspektivische schematische Ansicht einer Ausführung des Übergabewerkzeuges zusammen mit einer ringförmigen Anordnung radial beweglicher Stützfinger;
- Fig. 8: eine schematische Seitenansicht eines unteren Bereichs eines weiteren Ausführungsbeispiels des Wicklungsträgers bei einem Aufwickeln der Spulenmatte;
- Fig. 9: eine schematische Seitenansicht einer Ausführungsvariante des Wicklungsträgers zusammen mit einem linearen Werkstückträger beim Aufnehmen der Spulenmatte;
- Fig. 10: eine schematische Seitenansicht der Fügevorrichtung gemäß der ersten Ausführungsform in einer Situation, in der der Wicklungsträger in das Übergabewerkzeug eingefügt ist und vor einem Übertragen der Spulenmatte;
- Fig. 11: eine Ansicht wie in Fig. 10 nach dem Übertragen der Spulenmatte von dem Wicklungsträger auf das Übergabewerkzeug;
- Fig. 12: ein vergrößertes Detail aus Fig. 11 mit einer Illustration der Bewegung von Ausstoßelementen und der Spulenmatte beim Übertragen;
- Fig. 13: eine perspektivische Ansicht der Ausführungsvariante des Übergabewerkzeugs mit der Anordnung von Stützfingern gemäß Fig. 7, welche zeigt, wie die Stützfinger die in Fig. 11 und 12 gezeigte Übertragung der Spulenmatte von dem Wicklungsträger auf das Übergabewerkzeug unterstützen;
- Fig. 14: eine schematische Seitenansicht des in das Übergabewerkzeug eingefügten Stators vor einem Übergeben der Spulenmatte von dem Übergabewerkzeug auf den Stator;
- Fig. 15: ein vergrößertes Detail aus Fig. 14, bei welchem die Bewegung der Drähte oder Wicklungen der Spulenmatte von dem Übergabewerkzeug auf den Stator angedeutet ist;
- Fig. 16: eine Darstellung wie in Fig. 14 nach dem Übergeben der Spulenmatte auf den Stator;
- Fig. 17: eine perspektivische Ansicht der Ausführungsvariante des Übergabewerkzeugs mit der Anordnung von Stützfingern gemäß Fig. 7, welche zeigt, wie die Stützfinger das Übergeben der Spulenmatte von dem Übergabewerkzeug auf den Stator unterstützen;
- Fig. 18: eine schematische perspektivische Ansicht einer Anordnung aus Stator und Übergabewerkzeugs mit Stützfinger in einer weiteren Ausführungsvariante, wobei zu Darstellungszwecken nur einer der Stützfinger dargestellt ist und die Spulenmatte nicht dargestellt ist,
- Fig. 19: ein vergrößertes Detail aus Fig. 18;
- Fig. 20: eine schematische Seitenansicht (in axialer Richtung) des Wicklungsträgers der Fügevorrichtung gemäß einer zweiten Ausführungsform;
- Fig. 21: eine vergrößerte Detailansicht eines Teilbereichs des Wicklungsträgers von Fig. 20;
- Fig. 22: eine schematische Seitenansicht (in axialer Richtung) des Übergabewerkzeugs der Fügevorrichtung gemäß einer zweiten Ausführungsform;
- Fig. 23: eine vergrößerte Detaildarstellung eines Bereichs von Fig. 22;
- Fig. 24a bis 24c: Seitenansichten eines Teilbereichs der Fügevorrichtung gemäß der zweiten Ausführungsform in einer Situation, bei der der Wicklungsträger von Fig. 20 und 21 konzentrisch in das Übergabewerkzeug von Fig. 22 und 32 eingefügt ist, während unterschiedlicher Stadien einer Übertragung der Spulenmatte von dem Wicklungsträger auf das Übergabewerkzeug;
- Fig. 25: eine Seitenansicht der Fügevorrichtung gemäß der zweiten Ausführungsform mit konzentrisch in das Übergabewerkzeug eingefügtem Wicklungsträger bei einem in Fig. 24a dargestellten ersten Stadium der Übertragung;
- Fig. 26: eine Seitenansicht der Fügevorrichtung gemäß der zweiten Ausführungsform mit konzentrisch in das Übergabewerkzeug eingefügtem Wicklungsträger bei einem in Fig. 24b dargestellten zweiten Stadium der Übertragung;
- Fig. 27: eine Seitenansicht der Fügevorrichtung gemäß der zweiten Ausführungsform mit konzentrisch in das Übergabewerkzeug eingefügtem Wicklungsträger bei einem in Fig. 24c dargestellten dritten Stadium der Übertragung;
- Fig. 28: eine Seitansicht einer Anordnung aus Übergabewerkzeug gemäß der zweiten Ausführungsform und Stator des Außenläufers vor einer Übergabe der Spulenmatte auf den Stator; und
- Fig. 29: eine Detailansicht von Fig. 28, bei der die Bewegung der Drähte oder Wicklungen bei der Übergabe dargestellt ist.

Im Folgenden werden Ausführungsformen eines Fügeverfahrens und einer Fügevorrichtung 10 zum Fügen einer Spulenmatte 12 auf einen Stator 14 eines Außenläufermotors anhand der beigefügten Zeichnungen erläutert.

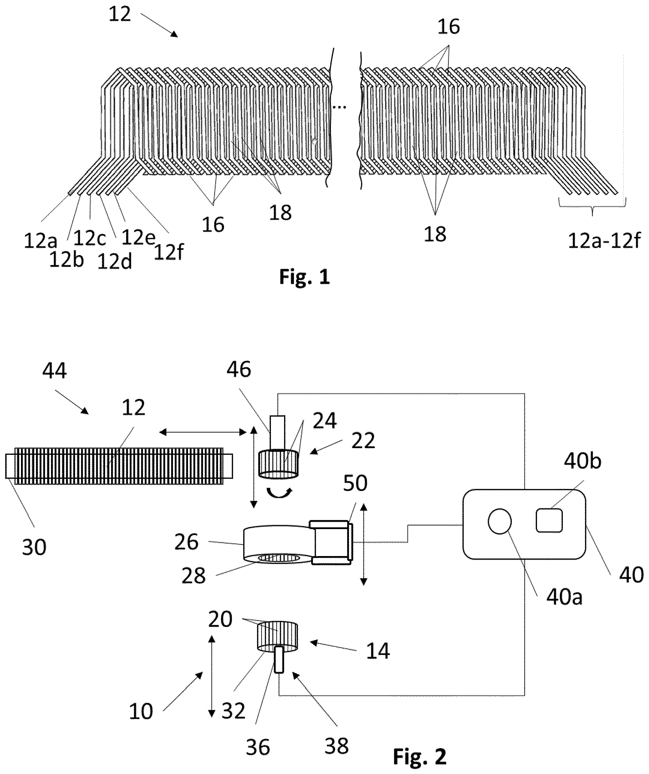

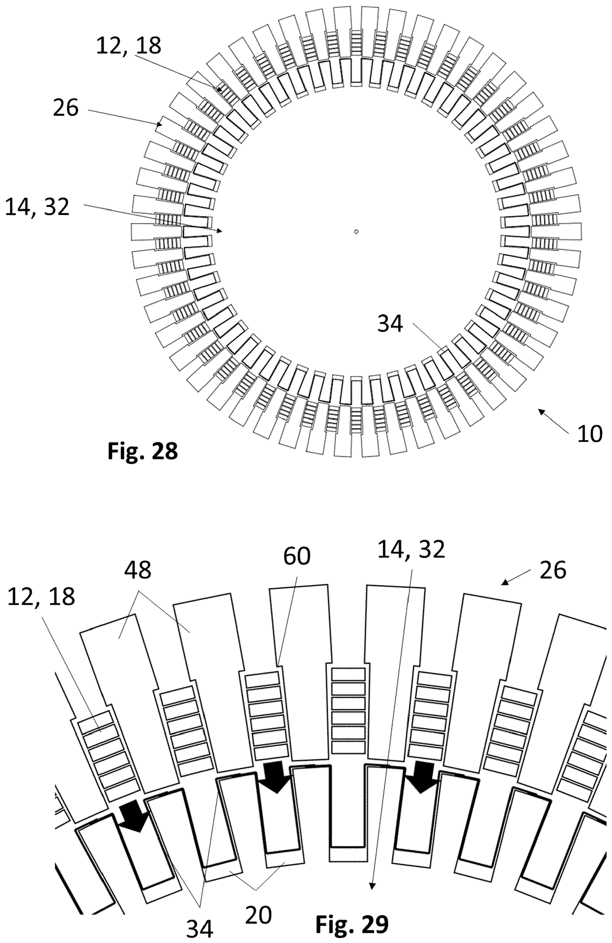

Unter Bezugnahme auf die Fig. 1, 2, 6, 8, 12, 24a-24c, 15 und 29 umfasst das Fügeverfahren die Schritte:
a) Bereitstellen einer Spulenmatte 12 mit durch Wicklungsköpfe 16 verbundenen geradlinigen Drahtabschnitten 18,
b) Bereitstellen eines Stators 14 mit radial nach außen öffnenden Statornuten 20,
c) Aufrollen der Spulenmatte 12 auf einen Wicklungsträger 22, der radial nach außen öffnende Wicklungsträger-Aufnahmenuten 24 aufweist, in die die geradlinigen Drahtabschnitte 18 eingefügt werden,
d) Überführen der Spulenmatte 12 von dem Wicklungsträger 22 auf ein Übergabewerkzeug 26, das radial nach innen öffnende Übergabewerkzeug-Aufnahmenuten 28 aufweist, wobei die Wicklungsträger-Aufnahmenuten 24 mit den Übergabewerkzeug-Aufnahmenuten 28 ausgerichtet werden und die geradlinigen Drahtabschnitte 18 von den Wicklungsträger-Aufnahmenuten 24 in die Übergabewerkzeug-Aufnahmenuten 28 überführt werden, und
e) Überführen der Spulenmatte 12 von dem Übergabewerkzeug 26 auf den Stator 14, wobei die Übergabewerkzeug-Aufnahmenuten 28 mit den Statornuten 20 ausgerichtet werden und die geradlinigen Drahtabschnitte 18 von den Übergabewerkzeug-Aufnahmenuten 28 radial nach innen in die Statornuten 20 überführt werden.

Ein Beispiel für die bereit zu stellende Spulenmatte 12 ist in Fig. 1 dargestellt. Die Spulenmatte 12 wird dabei außerhalb des Stators 14 aus wenigstens einem oder vorzugsweise - wie dargestellt - mehreren wellenförmig gebogenen Drähten 12a-12f vorgefertigt. Beispiele für Fertigungsverfahren zum Vorfertigen der Spulenmatte 12 und mögliche grundsätzliche Ausbildungen der Spulenmatte 12 sind aus den Literaturstellen [2] und [3] bekannt. Demnach lässt sich die Spulenmatte 12 z.B. durch Wickeln, wie z.B. Schwertwickeln, Stapeln, Stecken oder Flechten aus den Drähten 12a-12f herstellen. Die Spulenmatte 12 wird zunächst anhand der gewünschten Konfiguration der späteren Spulenwicklung im Stator 14 designt und anschließend vorzugsweise aus Rechteckdraht mit Isolierschicht in industrieller Großserienfertigung hergestellt. Insbesondere wird die Spulenmatte 12 auf einer linearen Halterung 30 bereitgestellt, wie sie grundsätzlich aus [6] und [7] bekannt ist.

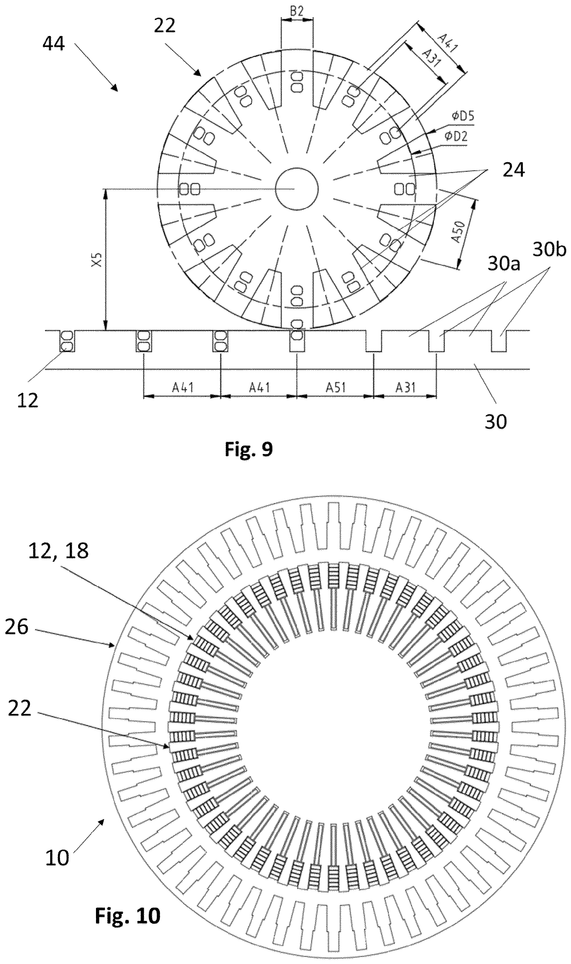

Wie dies in Fig. 9 angedeutet ist, kann die sich länglich erstreckende Halterung 30 eine Reihe von Zähnen 30a mit Zahnlücken 30b dazwischen aufweisen, so dass die geradlinigen Drahtabschnitte 18 der Spulenmatte 12 in den Zahnlücken 30b aufgenommen sind.

Die Abstände zwischen den geradlinigen Drahtabschnitten 18 sind bei einigen Ausführungsformen bereits entsprechend der geplanten radialen Lage der Drahtabschnitte 18 in dem Stator 14 gewählt. Abstände A41, A51, A31 zwischen den Zahnlücken 30b können entsprechend unterschiedlich ausgebildet sein.

Ausführungsbeispiele für den Stator 14 sind in Fig. 2, 6, 6, 14-16, sowie 18 und 19 schematisch dargestellt. Der Stator 14 weist - wie dies grundsätzlich gut bekannt ist - ein Blechpaket 32 auf, an dessen Außenumfang die Anordnung nach außen öffnender Statornuten 20 ausgebildet ist.

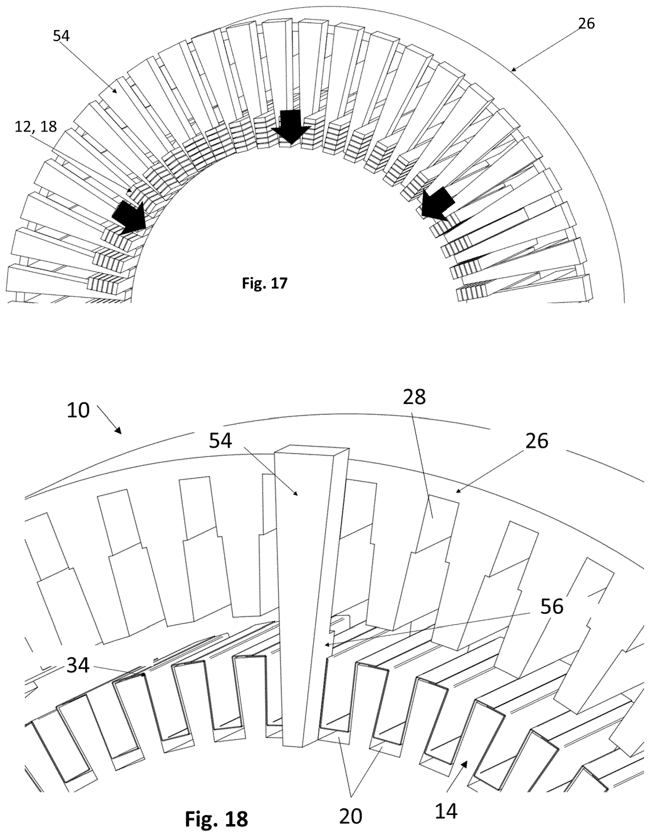

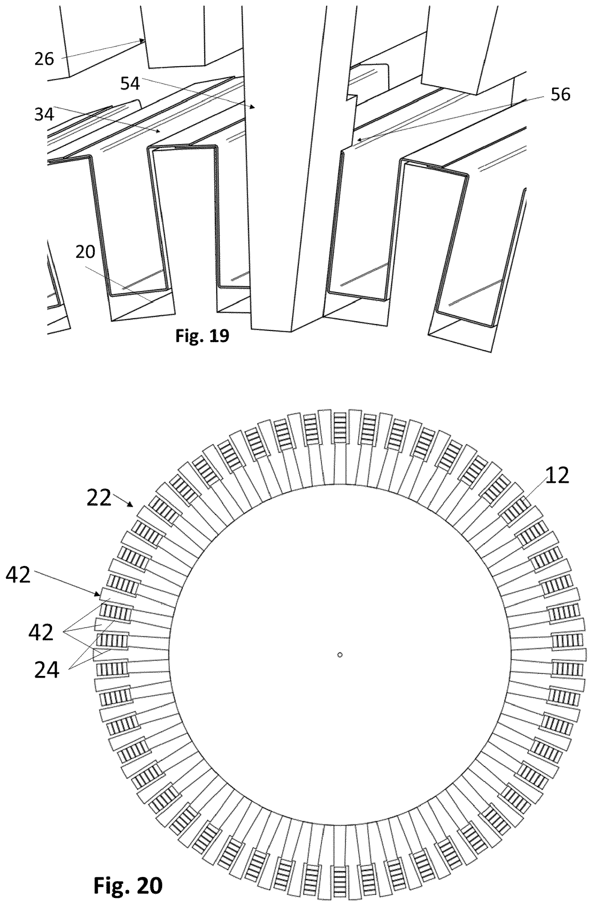

Wie man insbesondere den Fig. 18 und 19 entnehmen kann, wird der Stator 14 insbesondere mit Nutisolierungen 34 bereitgestellt. Hierzu werden zuvor Isolationspapiere in die Statornuten 20 eingefügt.

Vorrichtungen und Verfahren zum Einfügen von Isolationspapieren sind für Innenläufer-Statoren aus den Literaturstellen [4] und [5] bekannt. Durch entsprechende Modifikation zur Anpassung an die bei Außenläufern geänderte Geometrie mit nach außen öffnenden Statornuten 20 lassen sich diese bekannten Technologien leicht auch für die Bereitstellung der vorisolierten Statornuten 20, wie sie in den Fig. 18 und 19 gezeigt sind, nutzen. Insbesondere werden Nutkanten an den Statornuten 20 mit Z-förmig oder Omega-förmig geformten Nutisolierungen 34 überdeckt.

Der so vorgefertigte Stator 14 wird gemäß Fig. 2 insbesondere auf einer Stator-Halterung 36 bereitgestellt. Die Stator-Halterung 36 kann stationär ausgebildet sein oder an einer Stator-Handlingseinrichtung 38 - z.B. Roboterarm, Transportband, Portalanlage, ... bewegbar angeordnet sein.

Eine schematische Übersicht einer Ausführungsform der Fügevorrichtung 10 zum Durchführen des Fügeverfahrens ist in Fig. 2 dargestellt. Die Fügevorrichtung 10 ist zum Fügen der Spulenmatte 12, die durch Wicklungsköpfe 14 verbundene geradlinige Drahtabschnitte 18 aufweist, in die nach außen öffnende Statornuten 20 des Stators 14 eines Außenläufermotors ausgebildet.

Die Führungsvorrichtung 10 weist den Wicklungsträger 22 und das Übergabewerkzeug 26 auf.

Bei einigen Ausführungsformen weist Führungsvorrichtung 10 weiter eine elektronische, insbesondere computerimplementierte Steuerung 40 mit einem Prozessor 40a und einem Speicher 40b auf, in dem ein Computerprogramm mit Anweisungen zum Durchführen des Fügeverfahrens gespeichert ist.

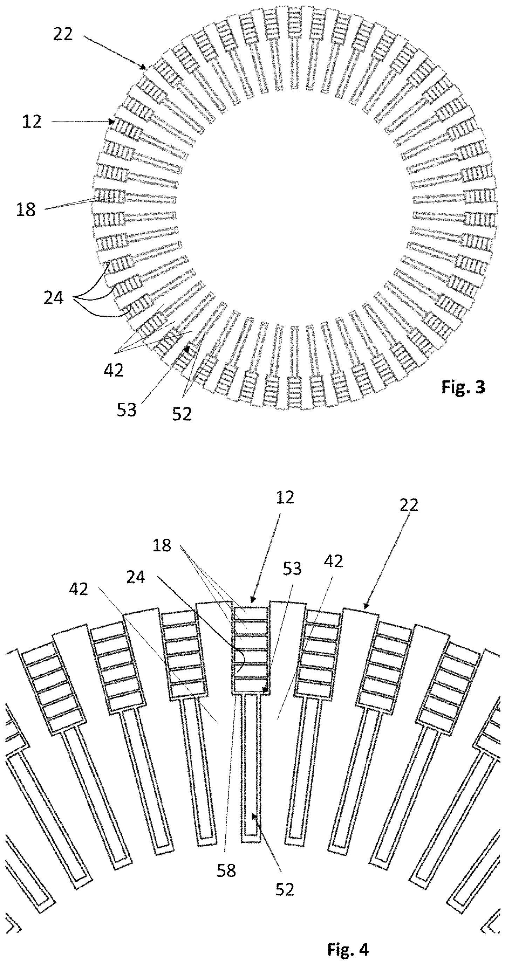

Ausführungsbeispiele für den Wicklungsträger 22 sind in den Fig. 3, 4, 8, 9 sowie 20 und 21 dargestellt. Demnach weist der Wicklungsträger 22 eine ringförmige Anordnung radial nach außen öffnender Wicklungsträger-Aufnahmenuten 24 derart auf, dass die Spulenmatte 12 unter Einfügen der geradlinigen Drahtabschnitte 18 in die Wicklungsträger-Aufnahmenuten 24 aufrollbar ist. Die Wicklungsträger-Aufnahmenuten 24 sind durch sich Wicklungsträger-Nutbegrenzungselemente 42 begrenzt. Die Ausbildung der Wicklungsträger-Nutbegrenzungselemente 42 kann sehr unterschiedlich sein. Insbesondere können als Wicklungsträger 22 Fügedorne vorgesehen werden, wie sie zum Fügen von Spulenmatten in Innenläufer-Statoren beispielsweise aus den Literaturstellen [6], [7] oder [8] bekannt sind.

Zum Aufrollen der Spulenmatte 12 weisen einige Ausführungsformen der Fügevorrichtung 10 eine Aufrolleinrichtung 44 auf, von der Ausführungsbeispiele in den Fig. 2, 8 und 9 dargestellt sind. Insbesondere ist der Wicklungsträger 22 an einer durch die Steuerung 40 ansteuerbaren Wicklungsträger-Handlingseinrichtung 46 angeordnet, mittels der der Wicklungsträger 22 relativ zu der Halterung 30 linear bewegbar ist und in Drehung versetzbar ist, um die Spulenmatte 12 aufzurollen. Bei einigen Ausführungsformen ist die Wicklungsträger-Handlingseinrichtung 46, wie durch den Doppelpfeil angedeutet, dazu eingerichtet, den Wicklungsträger 22 hin zu dem Übergabewerkzeug 26 zu bewegen, um die Spulenmatte 12 auf das Übergabewerkzeug 26 zu überführen.

Ein Aufrollen der Spulenmatte 12 auf den Wicklungsträger 22 sowie Ausgestaltungen des Wicklungsträgers 22 sind für Verfahren zum Fügen von Spulenmatten in Innenläufer-Statoren aus den Literaturstellen [6] und [7] bekannt. Die gleichen Technologien können auch hier eingesetzt werden.

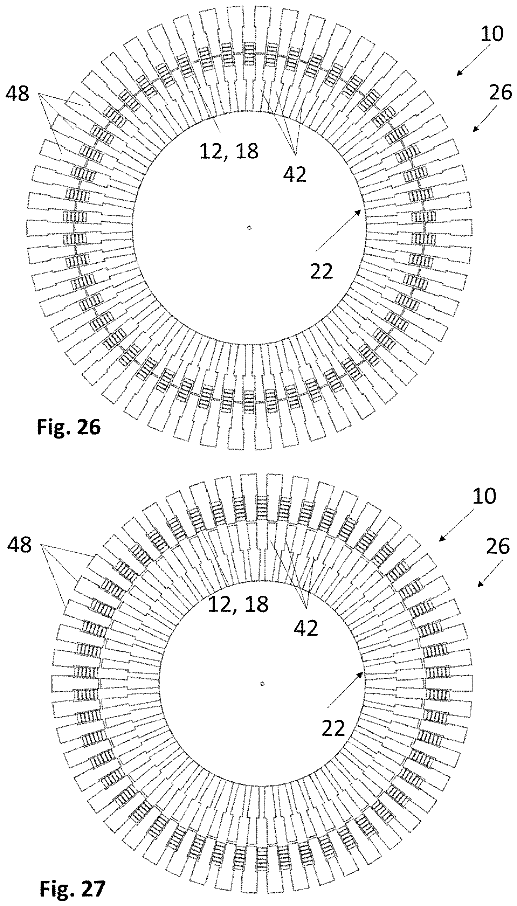

Ausführungsbeispiele für das Übergabewerkzeug 26 sind in den Fig. 2, 5, 7, 10-16, 17, 18 und 19 und 22-29 dargestellt. Das Übergabewerkzeug 26 weist die ringförmige Anordnung nach innen öffnender Übergabewerkzeug-Aufnahmenuten 28 auf und ist dazu eingerichtet, die Spulenmatte 12 von dem Wicklungsträger 22 aufzunehmen und auf den Stator 14 zu übergeben. Die Übergabewerkzeug-Aufnahmenuten 28 werden jeweils durch Übergabewerkzeug-Nutbegrenzungselemente 48 begrenzt.

Das Übergabewerkzeug 26 ist bei einigen Ausführungsformen insbesondere an einer durch die Steuerung 40 ansteuerbaren Übergabewerkzeug-Handlingseinrichtung 50 angeordnet, mittels der das Übergabewerkzeug 26 relativ zu dem Wicklungsträger 22 und der Stator-Halterung 36 mit dem Stator 14 bewegbar ist. Bei einigen anderen Ausführungsformen ist das Übergabewerkzeug 26 stationär gehalten, und die Relativbewegungen von Wicklungsträger 22, Übergabewerkzeug 26 und Stator-Halterung 36 erfolgen durch Bewegung des Wicklungsträgers 22 mittels der Wicklungsträger-Handlingseinrichtung 46 bzw. mittels Bewegung der Stator-Handlingseinrichtung 38.

Beispiele für die Handlingseinrichtungen 38, 46, 50 sind Roboterarme, Lineartransportanlagen sowie Portalanlagen. Die Handlingseinrichtungen 38, 46, 50 können weitere durch die Steuerung 40 ansteuerbare Aktoren aufweisen, insbesondere zur gesteuerten radialen Bewegung einzelner Elemente von Wicklungsträger 22 bzw. Übergabewerkzeug 26 bzw. Stator-Halterung 36.

Im Folgenden wird eine erste Ausführungsform der Fügevorrichtung 10 sowie eines damit durchführbaren Fügeverfahrens anhand der Darstellung in den Fig. 3 bis 19 näher erläutert.

Gemäß Fig. 3 und 4 sind die Wicklungsträger-Nutbegrenzungselemente 42 des Wicklungsträgers 22 gemäß der ersten Ausführungsform starr oder stationär angeordnet oder gehalten. Der Wicklungsträger 22 hat beispielsweise einen Außendurchmesser der (im Wesentlichen) gleich dem Statordurchmesser ist. Bei einigen Ausführungsformen ist der Durchmesser des Wicklungsträgers 22 größer als der Statordurchmesser. Im Prinzip kann der Durchmesser des Wicklungsträger 22 auch kleiner als der Statordurchmesser sein, was aber weniger bevorzugt ist, da dies im Prozess zu mehr Verformungsschritten für die Spulenmatte 12 führt.

Der Wicklungsträger 22 weist weiter zwischen jeweils benachbarten Wicklungsträger-Nutbegrenzungselementen 42 jeweils wenigstens ein Ausstoßelement 52 auf, das gesteuert durch die Steuerung 40 radial beweglich ist, um die Spulenmatte 12 beim späteren Überführen auf das Übergabewerkzeug 26 radial auszustoßen. Beispielsweise sind die Ausstoßelemente 52 radial bewegliche Expandierbleche.

Insbesondere sind die Ausstoßelemente 52 über einen durch die Steuerung 40 angesteuerten Aktor mit entsprechendem Getriebe (nicht dargestellt) radial von ihrer Ruhestellung, in der sie zumindest auf radiale Höhe eines Nutgrundes 53 der jeweiligen Wicklungsträger-Aufnahmenut 24 oder weiter radial einwärts zurückgezogen sind, in eine Ausstoßposition zum vollständigen Ausstoßen der geradlinigen Drahtabschnitte 18 aus den Wicklungsträger-Aufnahmenuten 24 und zum Überführen in Übergabewerkzeug-Aufnahmenuten 28 und wieder zurück bewegbar. Beispiele für derartig radial bewegbare Elemente sind dem Fachmann aus der Wellenwicklungstechnik für Innenläufer-Statoren, siehe z.B. [6] - [8] bekannt.

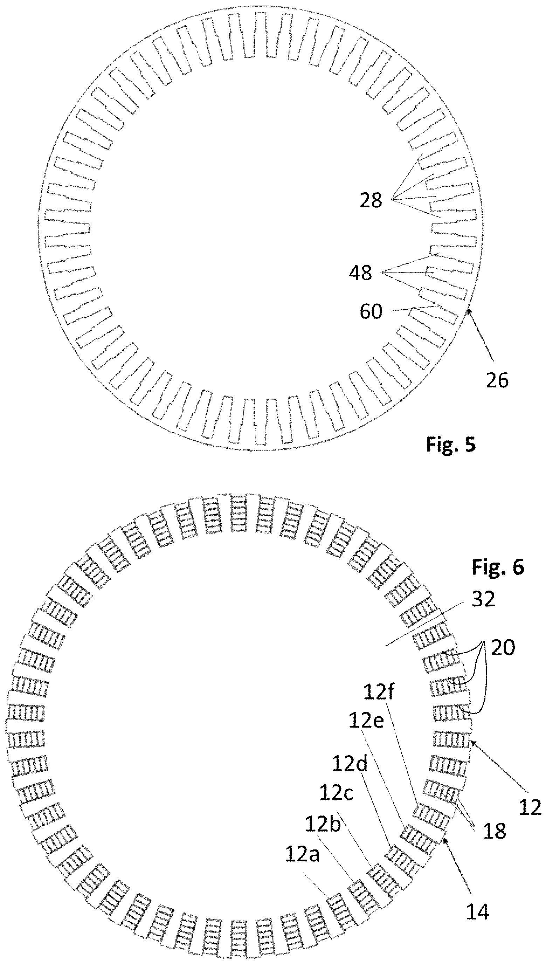

Gemäß Fig. 5 ist das Übergabewerkzeug 26 der ersten Ausführungsform ringförmig oder hülsenförmig mit einem derartigen Innendurchmesser ausgebildet, dass der Stator 14 mit geringem Spiel dazwischen aufgenommen werden kann. Die Übergabewerkzeug-Nutbegrenzungselemente 48 sind beispielsweise starre rippenartig radial nach innen ragende Vorsprünge.

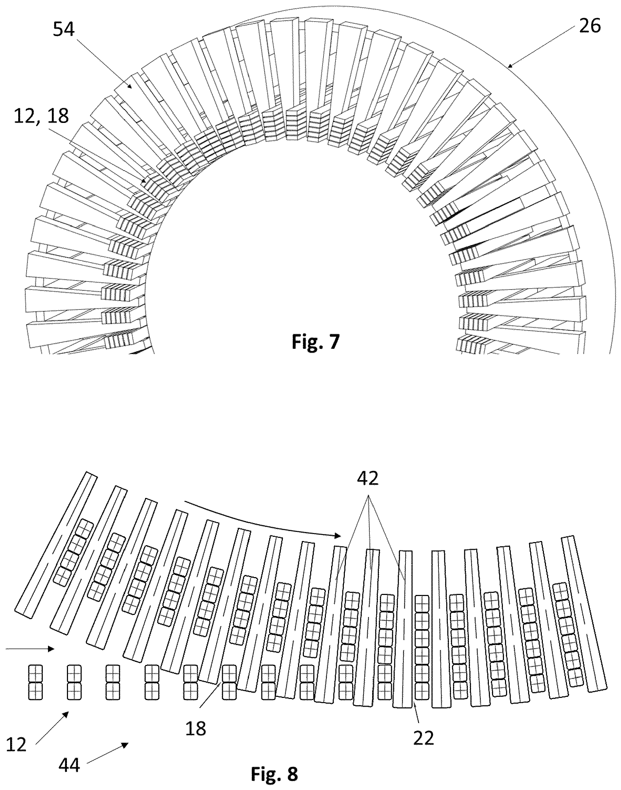

Bei einigen Ausführungsformen, von denen ein Beispiel in Fig. 7 gezeigt ist, ist auf jeder axialen Seite des Übergabewerkzeugs 26 jeweils eine ringförmige Anordnung radial beweglicher Stützfinger 54 vorgesehen.

Insbesondere ist auf jeder axialen Seite eines jeden Übergabewerkzeug-Nutbegrenzungselements 48 ein Stützfinger 54 vorgesehen. Bei einigen Ausführungsformen sind die Stützfinger 54 keilförmig ausgebildet. Die Stützfinger 54 sind dazu ausgebildet, die Drahtabschnitte 18 beim Einführen der Drahtabschnitte 18 in die Übergabewerkzeug-Aufnahmenuten 28 und beim Übergeben der Drahtabschnitte 18 von den Übergabewerkzeug-Aufnahmenuten 28 in die Statornuten 20 zu führen. Hierzu wird sind die Stützfinger 54 gesteuert durch die Steuerung 40 radial beweglich. Insbesondere können sich die Stützfinger 54 zusammen mit den Drahtabschnitten 18 zumindest über eine Teilstrecke mitbewegen. Auch hier können entsprechende durch die Steuerung 40 gesteuerte Aktoren, beispielsweise mit Getriebe, vorgesehen sein (nicht dargestellt).

Bei einigen Ausführungsformen, von denen ein Beispiel in den Fig. 18 und 19 dargestellt ist, sind die Stützfinger 54 zum Festhalten und/oder Klemmen der Nutisolierungen 34 ausgebildet. Beispielsweise weisen die Stützfinger 54 auf der dem Übergabewerkzeug-Nutbegrenzungselement 48 zugewandten Seite einen Vorsprung 56 auf, der durch radiales einwärts Fahren des Stützfingers 54 zum Übergeben der Spulenmatte 12 auf den Stator 14 auf die Stator-Nutbegrenzungen 58 zwischen den Statornuten 20 auffahren kann und so die über die Nutkanten der Statornuten 20 gelegten Nutisolierungen festklemmen kann. Durch entsprechende Gegenbewegung können die Nutisolierungen 34 wieder freigegeben werden, um Drähte zusammen mit den Nutisolierungen (Papier) 34 noch komplett auf den Nutgrund der Statornut 20 zu komprimieren.

Im Folgenden wird der Ablauf des Fügeverfahrens gemäß der ersten Ausführungsform anhand der Darstellungen in den Fig. 2, 8, 9, 3, 4 sowie 10 bis 19 näher erläutert.

In einem ersten Schritt wird die Spulenmatte 12 auf den Wicklungsträger 22 aufgerollt. Das Aufrollen erfolgt so, wie dies in der [6] oder [7] erläutert und in den Fig. 8 und 9 gezeigt ist. Wicklungsträger 22 und Halterung 30 mit darauf bereit gestellter Spulenmatte 12 werden linear relativ zueinander bewegt.

Beispielsweise kann die Halterung 30 in Längsrichtung hin zu dem Wicklungsträger 22 gefahren werden, oder der Wicklungsträger 22 wird mittels der Wicklungsträger-Handlingseinrichtung 46 linear über die Halterung 30 bewegt oder es erfolgen beide Bewegungen. Dabei wird der Wicklungsträger 22 gedreht. Durch nicht dargestellte Unterstützungselemente, wie gebogene Rampen oder sonstige Führungen oder Gurte oder dergleichen, die an den Wicklungsköpfen 16 angreifen, wird die Spulenmatte 12 von der Halterung 30 abgehoben und auf den Wicklungsträger 22 derart gelegt, dass die geradlinigen Drahtabschnitte 18 in die Wicklungsträger-Aufnahmenuten 24 eingeführt werden. Der Aufrolldurchmesser kann (aber nicht muss) dem späteren Spulendurchmesser am Stator 14 entsprechen.

Die beispielsweise als Rechen ausgebildete Halterung 30 und der Wicklungsträger 22 können, wie in Fig. 9 dargestellt, durch spezielle Geometrien an die zuvor designte Form der Spulenmatte 12 angepasst werden, so dass Drahtbeschädigungen reduziert werden.

In einem zweiten Schritt wird der Wicklungsträger 22 konzentrisch in das Übergabewerkzeug eingeführt, und die Wicklungsträger-Aufnahmenuten 24 werden mit den Übergabewerkzeug-Aufnahmenuten 48 ausgerichtet, wie dies in Fig. 10 dargestellt ist. Dies erfolgt mittels einer oder mehrerer der Handlingseinrichtungen 46, 50, angesteuert durch die Steuerung 40.

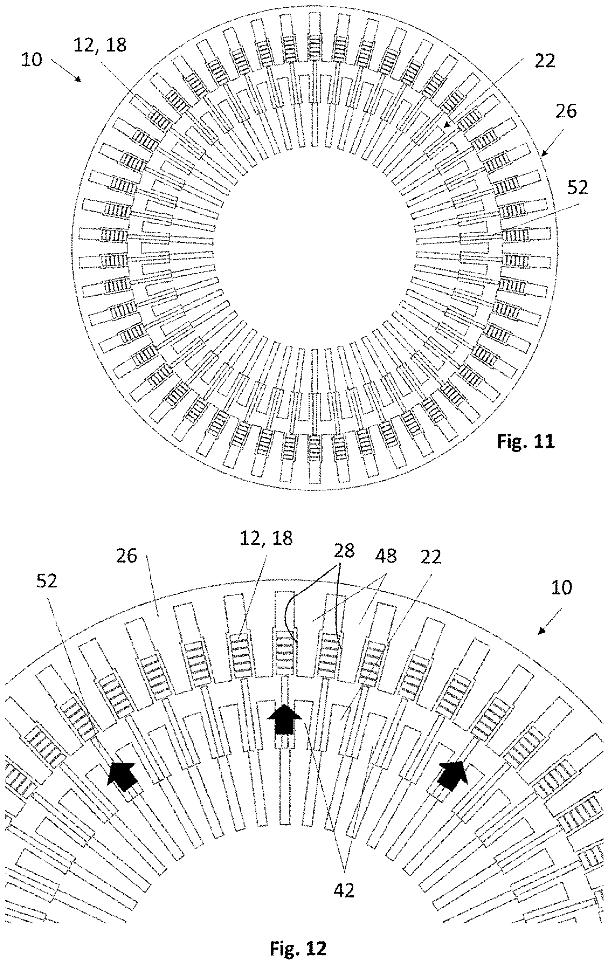

Dann wird, wie in den Fig. 11 bis 13 gezeigt, die Spulenmatte 12 vom Wicklungsträger 22 auf das Übergabewerkzeug 24 überführt. Hierfür wird die Spulenmatte 12 wie durch die Pfeile in Fig. 12 angedeutet expandiert, d.h. von einem kleineren Aufrolldurchmesser, mit der sich die Spulenmatte 12 auf dem Wicklungsträger 22 befindet, auf einen größeren Aufnahmedurchmesser, mit dem sich die Spulenmatte 12 in dem Übergabewerkzeug 24 befindet, vergrößert.

Das Expandieren erfolgt insbesondere durch eine radial nach außen gerichtete Bewegung der Ausstoßelemente 52.

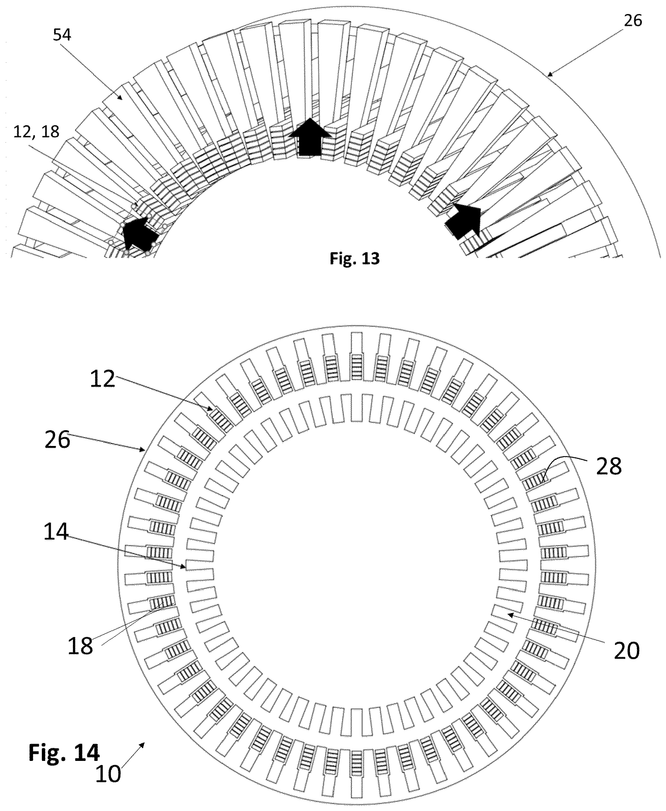

Liegen die Nutbegrenzungselemente 42, 48 von Wicklungsträger 22 und Übergabewerkzeug 24 dicht beieinander, lässt sich das Expandieren auch ohne zusätzliche Führungen durchführen. Vorzugsweise wird das Expandieren wie in Fig. 13 gezeigt durch die Stützfinger 54 geführt, die hierzu vor dem Expandieren auf eine radial nach innen ausgefahrene Führungsposition gefahren werden und dort bei einigen Ausführungsformen während des Expandierens gehalten werden. Bei einigen Ausführungsformen können die Stützfinger auch mit den Drähten 12a-12f mitbewegt werden.

Es ergibt sich dann die in den Fig. 11 gezeigte Situation, in der die geradlinigen Drahtabschnitte 18 vollständig in den Übergabewerkzeug-Aufnahmenuten 26 aufgenommen sind.

In einem dritten Schritt, der in den Fig. 14 bis 19 dargestellt ist, wird die Spulenmatte 12 von dem Übergabewerkzeug 24 auf den Stator 14 übergeben.

Hierzu werden mittels einer oder mehrerer der Handlingseinrichtungen 38, 50 der Stator 14 und das Übergabewerkzeug 24 konzentrisch zueinander angeordnet, so dass deren Nuten 20, 28 zueinander ausgerichtet sind, wie dies in Fig. 14 gezeigt ist.

Anschließend werden die Drähte 12a-12f mittels nicht dargestellter radial bewegbarer Greifer, Gurte oder Schieber, die an den axial nach außen vorstehenden Wicklungsköpfen 16 angreifen, von dem Übergabewerkzeug 24 auf den Stator 14 übergeben, wobei die Drahtabschnitte 18 in die Aufnahmenuten eingefügt werden. Dabei wird die Spulenmatte 12 komprimiert, d.h. ihr Durchmesser wird von einem größeren Aufnahmedurchmesser, mit der sie in dem Übergabewerkzeug 24 aufgenommen ist, auf einen kleineren Spulendurchmesser, den die Spulenmatte 12 an dem Stator 14 bestimmungsgemäß einnimmt, verkleinert.

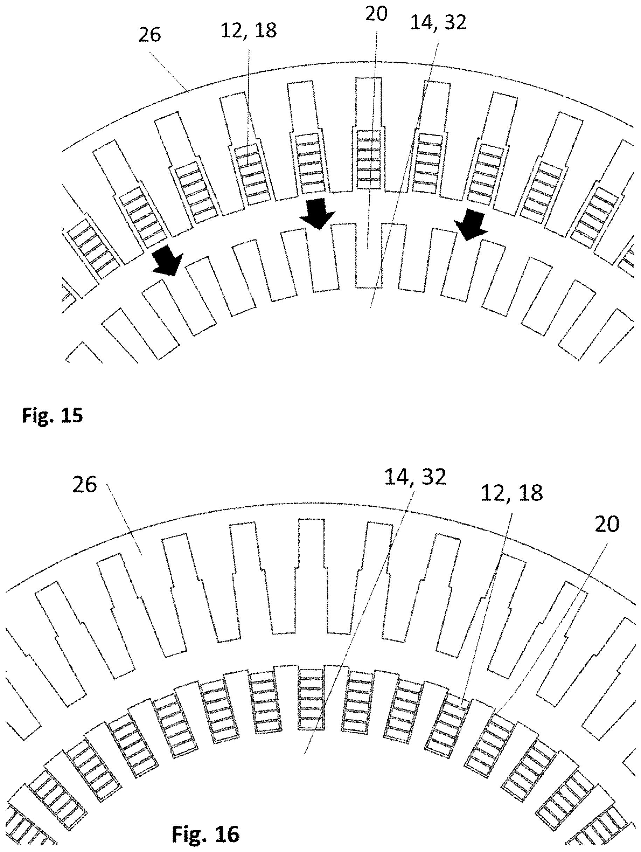

Auch dies kann, aber nicht muss, durch die Stützfinger 54 unterstützt werden, wie in Fig. 15 dargestellt.

Die Figuren 18 und 19 zeigen eine Ausführungsvariante. Demnach können die Stützfinger 54 beim Fügen der Spulenmatte 12 auf den Stator 14 die Nutisolierungen 34 (hier ausgebildet als Omega-förmig gefaltetes Papier) klemmen. So wird verhindert, dass beim Einschieben der Drahtabschnitte 18 das Papier in die Nut verdrängt wird. Dies ist in den Fig. 18 und 19 zur Vereinfachung nur mit einem Stützfinger 54 und ohne Drähte dargestellt. Im weiteren Verlauf des Einschiebens der Drahtabschnitte 18 werden bei einigen Ausführungsformen die Nutisolierungen 34 durch entsprechende Gegenbewegung der Stützfinger 54 wieder frei gegeben, um zu ermöglichen, dass die Nutisolierungen zusammen mit den Drähten bis auf den Nutgrund der Statornuten 20 geschoben werden.

Im Folgenden werden anhand der Darstellung in den Fig. 2, 8, 9, 20-29 eine zweite Ausführungsform des Fügeverfahren sowie der Fügevorrichtung 10 erläutert.

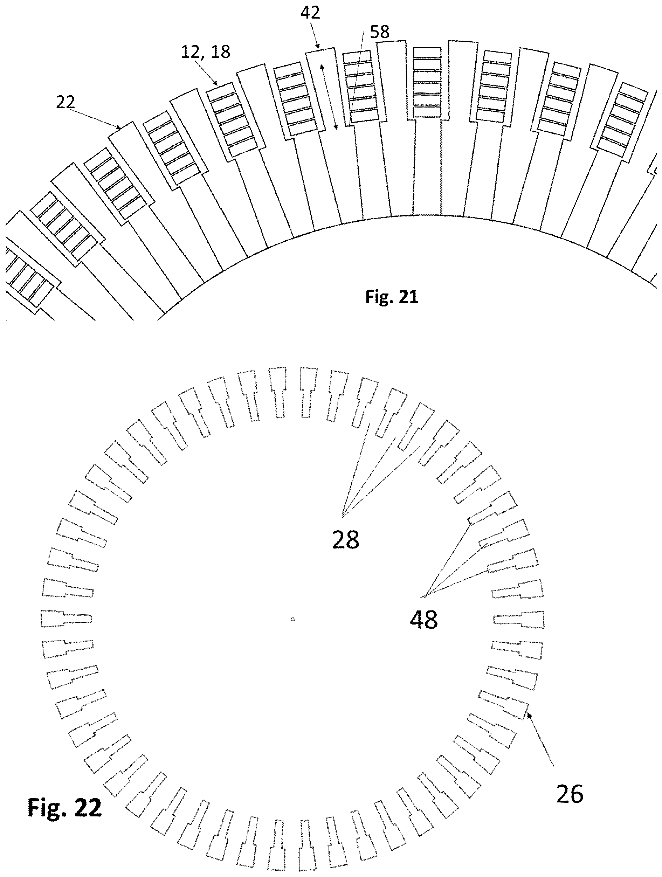

Wie in den Fig. 20 und 21 gezeigt, hat der Wicklungsträger 22 gemäß der zweiten Ausführungsform radial bewegliche Wicklungsträger-Nutbegrenzungselemente 42 (z.B. in Form von Lamellen). Beispielsweise sind hierzu nicht dargestellte Aktoren, eventuell mit Getriebe vorgesehen, die durch die Steuerung 40 angesteuert werden, und die die radiale Bewegung der Nutbegrenzungselemente 42 initiieren. Die Wicklungsträger-Nutbegrenzungselemente 42 weisen insbesondere eine Stufe 58 zum Bilden eines Teils des jeweiligen Nutgrundes der zugeordneten Wicklungsträger-Aufnahmenut 24 auf.

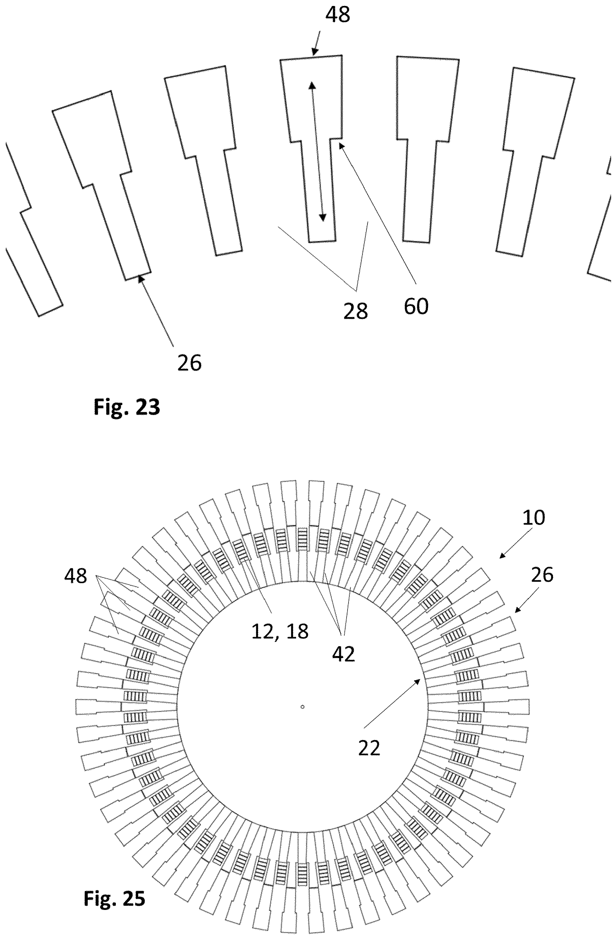

Gemäß Fig. 22 und 23 sind auch die Übergabewerkzeug-Nutbegrenzungselemente 48 des Übergabewerkzeugs 26 gemäß der zweiten Ausführungsform radial beweglich, insbesondere als Lamellen ausgeführt. Auch die radiale Bewegung der Übergabewerkzeug-Nutbegrenzungselemente 48 ist über die Steuerung 40 gesteuert. Auch hier sind Stufen 60 vorgesehen, die einen Teil des Nutgrundes der Übergabewerkzeug-Aufnahmenuten 28 bilden.

In einer Ausführungsvariante kann auch das Übergabewerkzeug 26 gemäß der zweiten Ausführungsform zusammen mit den Anordnungen von Stützfingern, wie oben beschrieben und in Fig. 7 und 17-19 gezeigt verwendet werden.

Im Folgenden wird anhand der Darstellung in den Fig. 8, 9, 24a-29 eine zweite Ausführungsform des Fügeverfahrens erläutert.

In einem ersten Schritt wird die Spulenmatte 12 vergleichbar wie in Fig. 8 und 9 gezeigt auf den in Fig. 20 gezeigten Wicklungsträger 22 aufgerollt. Bei einigen Ausführungsformen hat dieser einen größeren Durchmesser als der Durchmesser des Stators 14. Insbesondere ist der Aufroll-Durchmesser, mit der die Spulenmatte 12 auf den Wicklungsträger 22 aufgerollt wird, größer als der Statordurchmesser, so dass ein zusätzliches Expandieren an das Übergabewerkzeug 26 nicht notwendig ist. Bei bevorzugten Ausführungsformen werden die Wicklungsträger-Nutbegrenzungselemente 42 zum Aufrollen radial so positioniert, dass der Aufrolldurchmesser der Spulenmatte 12 auf dem Wicklungsträger 22 dem Aufnahmedurchmesser der Spulenmatte 12 auf dem Übergabewerkzeug 26 beim Aufstülpen desselben auf den Stator 14 entspricht.

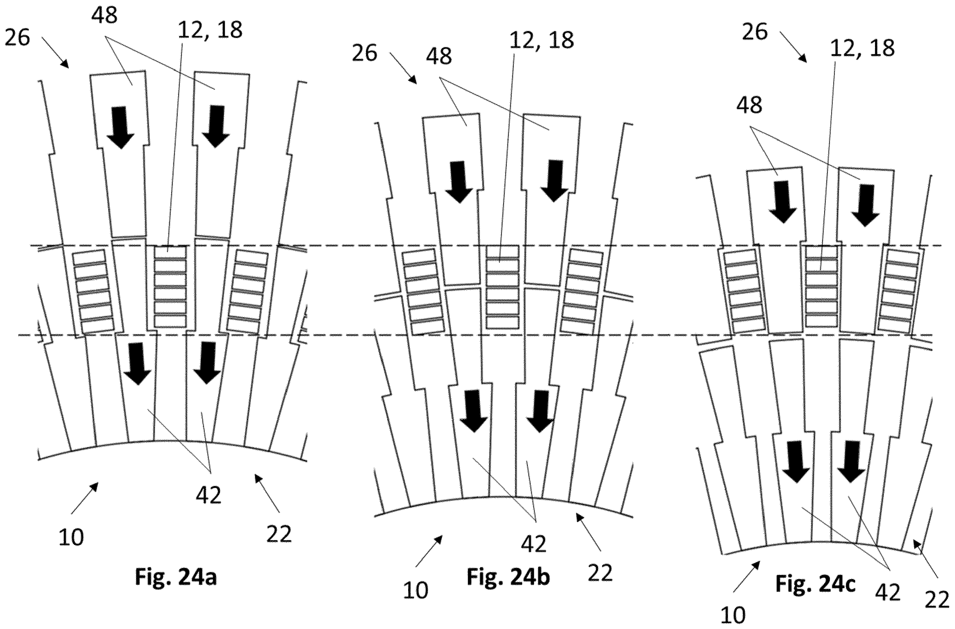

In einem zweiten Schritt, der in Fig. 24a-24c im Detail sowie den Fig. 25 bis 27 in der Übersicht gezeigt ist, wird die Spulenmatte 12 von dem Wicklungsträger 22 - möglichst ohne oder nur mit geringer Verformung - auf das Übergabewerkzeug 26 verfahren. Hierzu werden zunächst - wie oben bereits zur ersten Ausführungsform beschrieben - Wicklungsträger 22 und Übergabewerkzeug 26 konzentrisch zueinander angeordnet und mit ihren Aufnahmenuten 24, 28 zueinander ausgerichtet.

Dann werden die Wicklungsträger-Nutbegrenzungselemente 42 radial einwärts gefahren, während gleichzeitig die Übergabewerkzeug-Nutbegrenzungselemente 48 radial einwärts gefahren werden, um so zwischen die Drahtabschnitte 18 einzufahren. Somit bewegen sich hier nicht die Drahtabschnitte 18 nicht oder nur geringfügig, vielmehr werden die Nutbegrenzungselemente 42, 48 radial verfahren, um die Spulenmatte 12 zu übertragen.

Damit werden bei einigen Ausführungsformen Drähte 12a-12f der Spulenwicklung vom Wicklungsträger 22 an das Übergabewerkzeug 26 so übergeben, dass die Drähte 12a-12f den Durchmesser und Form möglichst behalten. Die Lamellen des Wicklungsträgers 22 ziehen zurück und die Lamellen des Übergabewerkzeuges 26 fahren zeitgleich zwischen die Drähte 12a-12f ein. So wird die Spulenmatte 12, ohne verformt werden zu müssen, übergeben.

Zusätzlich können Elemente, wie z.B. Halteringe an den Wickelköpfen 16 (nicht dargestellt), verhindern, dass die Spulenmatte 12 bei diesem Prozess der Übergabe von Wicklungsträger 22 zu Übergabewerkzeug 26 verrutscht. Es ist auch möglich, bei diesem Prozess die Stützfinger 54 zu nutzen.

In einem dritten Schritt wird die Spulenmatte 12 vom Übergabewerkzeug 26 auf den Stator 14 überführt. Hierzu werden zunächst wie oben bereits für die erste Ausführungsform beschrieben, das Übergabewerkzeug 26 und der Stator 14 konzentrisch angeordnet und mit ihren Nuten 28, 20 ausgerichtet.

Anschließend wird die Spulenmatte 12, wie oben zur ersten Ausführungsform beschrieben, z.B. mit radial beweglichen Greifern, Schiebern oder Gurten (nicht dargestellt), die an den Wicklungsköpfen 16 angreifen, von dem Übergabewerkzeug 26 auf den Stator 14 übergeben und dabei radial komprimiert. Insbesondere wird der Durchmesser der Spulenmatte 12 von dem größeren Aufnahmedurchmesser auf den kleineren Spulendurchmesser, mit dem die Spulenmatte 12 bestimmungsgemäß auf dem Stator 14 angeordnet ist, komprimiert.

Bei einigen Ausführungsvarianten der zweiten Ausführungsform werden hierbei die Übergabewerkzeug-Nutbegrenzungselemente 48 von der in Fig. 20 gezeigten radialen Lage aus noch weiter radial nach innen gefahren und klemmen so die Nutisolierungen 34 beim Einbringen der Drähte 12a-12f in die Statornuten 20 an dem Außenumfang des Stators 14 zwischen den Statornuten 20 fest. Demnach können auch die radial verschiebbaren Lamellen des Übergabewerkzeugs 26 das Papier klemmen bzw. halten. Das Klemmen erfolgt insbesondere beim Einführen der Drähte; im weiteren Verlauf können die Nutisolierungen 34 wieder freigegeben werden, so dass sie sich zusammen mit den Drähten bis zum Grund der Statornuten 20 bewegen können.

Bei einigen Ausführungsvarianten der zweiten Ausführungsform wird das Übergeben der Spulenmatte 12 von dem Übergabewerkzeug 26 auf den Stator 14 wie oben zur ersten Ausführungsform beschrieben mit den Stützfingern 54 geführt. Auch bei Verwendung bei der zweiten Ausführungsform können die Stützfinger 54 wie in den Fig. 18 und 19 gezeigt ausgebildet sein und die Nutisolierungen beim Übergeben festhalten.

Demnach können beim Übergeben die Bewegungen mit Stützfingern 54 geführt werden: Die Stützfinger 54 verhindern eine Beschädigung der Drähte 12a-12f an den scharfen Kanten des Blechpakets 32.

Wenngleich in den unterschiedlichen Ausführungsformen nur eine einzelne Spulenmatte 12 erwähnt worden ist, sollte klar sein, dass das auch mehr als eine Spulenmatte 12 mit den hier dargestellten Verfahren und Vorrichtungen in den Außenläufer-Stator 14 gefügt werden können. Falls mehrere Spulenmatten 12 verwendet werden, können diese gemeinsam aufgewickelt und überführt werden oder auch nacheinander überführt werden.

Weiter können Stützfinger 54 auch dem Wicklungsträger 22 zugeordnet sein, beispielsweise kann ein radial beweglicher Stützfinger mit nach außen gerichtetem dünneren Ende axial benachbart zu jedem Wicklungsträger-Nutbegrenzungselement 42 angeordnet sein.

Eine Relativbewegung von Übergabewerkzeug und Wicklungsträger oder Stator-Halterung kann auf unterschiedliche Weise erfolgen. Beispielsweise kann das Übergabewerkzeug mit der Übergabewerkzeug-Handlingseinrichtung 50 bewegt werden, es kann aber auch stationär gehalten werden, und die Relativbewegung erfolgt durch die anderen Handlingseinrichtungen 46, 38.

Zur Verbesserung der Prozesssicherheit in der industriellen Großserienfertigung von Statoren für Außenläufermotoren ist ein Fügeverfahren zum Fügen einer Spulenmatte (12) auf den Stator (14) eines Außenläufermotors beschrieben worden, umfassend:
a) Bereitstellen einer Spulenmatte (12) mit durch Wicklungsköpfe (16) verbundenen geradlinigen Drahtabschnitten (18),
b) Bereitstellen eines Stators (14) mit radial nach außen öffnenden Statornuten (20),
c) Aufrollen der Spulenmatte (12) auf einen Wicklungsträger (22), der radial nach außen öffnende Wicklungsträger-Aufnahmenuten (24) aufweist
d) Überführen der Spulenmatte (12) von dem Wicklungsträger (22) auf ein Übergabewerkzeug (26), das radial nach innen öffnende Übergabewerkzeug-Aufnahmenuten (28) aufweist, und
e) Überführen der Spulenmatte (12) von dem Übergabewerkzeug (26) auf den Stator (14). Außerdem sind eine Fügevorrichtung (10), eine Steuerung (40) und ein Computerprogramm zum Durchführen des Fügeverfahrens beschrieben worden.

### Bezugszeichenliste:

- 10: Fügevorrichtung
- 12: Spulenmatte
- 12a-12f: Draht
- 14: Stator
- 16: Wicklungskopf
- 18: geradliniger Drahtabschnitt
- 20: Statornut
- 22: Wicklungsträger
- 24: Wicklungsträger-Aufnahmenut
- 26: Übergabewerkzeug
- 28: Übergabewerkzeug-Aufnahmenut
- 30: lineare Halterung
- 30a: Zahn
- 30b: Zahnlücke
- 32: Blechpaket
- 34: Nutisolierung
- 36: Stator-Halterung
- 38: Stator-Handlingseinrichtung
- 40: Steuerung
- 40a: Prozessor
- 40b: Speicher
- 42: Wicklungsträger-Nutbegrenzungselement
- 44: Aufrolleinrichtung
- 46: Wicklungsträger-Handlingseinrichtung
- 48: Übergabewerkzeug-Nutbegrenzungselement
- 50: Übergabewerkzeug-Handlingseinrichtung
- 52: Ausstoßelement
- 53: Nutgrund
- 54: Stützfinger
- 56: Vorsprung
- 58: Stufe
- 60: Stufe

## Patentansprüche

1. Fügeverfahren zum Fügen einer Spulenmatte (12) auf einen Stator (14) eines Außenläufermotors, umfassend:
a) Bereitstellen einer Spulenmatte (12) mit durch Wicklungsköpfe (16) verbundenen geradlinigen Drahtabschnitten (18),
b) Bereitstellen eines Stators (14) mit radial nach außen öffnenden Statornuten (20),
c) Aufrollen der Spulenmatte (12) auf einen Wicklungsträger (22), der radial nach außen öffnende Wicklungsträger-Aufnahmenuten (24) aufweist, in die die geradlinigen Drahtabschnitte (18) eingefügt werden,
d) Überführen der Spulenmatte (12) von dem Wicklungsträger (22) auf ein Übergabewerkzeug (26), das radial nach innen öffnende Übergabewerkzeug-Aufnahmenuten (28) aufweist, wobei die Wicklungsträger-Aufnahmenuten (24) mit den Übergabewerkzeug-Aufnahmenuten (28) ausgerichtet werden und die geradlinigen Drahtabschnitte (18) von den Wicklungsträger-Aufnahmenuten (24) in die Übergabewerkzeug-Aufnahmenuten (28) überführt werden, und
e) Überführen der Spulenmatte (12) von dem Übergabewerkzeug (26) auf den Stator (14), wobei die Übergabewerkzeug-Aufnahmenuten (28) mit den Statornuten (20) ausgerichtet werden und die geradlinigen Drahtabschnitte (18) von den Übergabewerkzeug-Aufnahmenuten (28) radial nach innen in die Statornuten (20) überführt werden.

2. Fügeverfahren nach Anspruch 1, **dadurch gekennzeichnet,**
**dass** Schritt a) wenigstens einen oder mehrere der Schritte umfasst:
a1) Biegen von Drähten (12a-12f) mit im Wesentlichen rechteckigem Querschnitt und einer äußeren Isolierschicht zu Wellenwicklungsdrähten;
a2) Zusammenfügen mehrerer Wellenwicklungsdrähte, welche mäanderförmig mit geradlinigen Drahtabschnitten (18) und in unterschiedlichen Richtungen gebogenen Wicklungsköpfe (16) dazwischen ausgebildet sind;
a3) Herstellen der Spulenmatte (12) durch Wickeln, Stapeln, Flechten oder Stecken mehrerer Drähte (12a-12f);
a4) Bereitstellen der Spulenmatte (12) auf einer sich länglich erstreckenden Halterung (30), die eine Reihe von Zähnen (30a) mit Zahnlücken (30b) dazwischen aufweist, so dass die geradlinige Drahtabschnitte (18) der Spulenmatte (12) in den Zahnlücken (30b) aufgenommen sind.

3. Fügeverfahren nach einem der voranstehenden Ansprüche, **dadurch gekennzeichnet,**
**dass** Schritt b) wenigstens einen oder mehrere der Schritte umfasst:
b1) Bereitstellen eines Blechpakets (32) mit radial nach außen öffnenden Statornuten (20);
b2) Auskleiden der Statornuten (20) mit einer Nutisolierung (34);
b3) Einfügen von Isolationspapieren in die Statornuten (20);
b4) Überdecken von Nutkanten mit Z-förmig oder Omega-förmig geformten Nutisolierungen (34).

4. Fügeverfahren nach einem der voranstehenden Ansprüche, **dadurch gekennzeichnet,**
**dass** Schritt c) wenigstens einen oder mehrere der Schritte umfasst:
c1) Bereitstellen des Wicklungsträgers (22) mit einem Durchmesser, der gleich oder größer als der Durchmesser des Stators (14) ist;
c2) Bereitstellen des Wicklungsträgers (22) mit radial bewegbaren Ausstoßelementen (52) zum radial Ausstoßen der Spulenmatte (12) aus den Wicklungsträger-Aufnahmenuten (24);
c3) Bereitstellen einer Anordnung von radial beweglichen Stützfingern (54) axial benachbart zu Nutbegrenzungen der Wicklungsträger-Aufnahmenuten (24);
c4) Bereitstellen des Wicklungsträgers (22) mit radial beweglichen Wicklungsträger-Nutbegrenzungselementen (42);
c5) Aufnehmen der Spulenmatte (12) von einer sich linear erstreckenden Halterung (30) unter Drehen des Wicklungsträgers (22) und relativem linearen Bewegen von Wicklungsträger (22) und
Halterung (30);
c6) Aufrollen der Spulenmatte (12) mit einem Aufrolldurchmesser, der gleich oder größer als der Spulendurchmesser der später in den Stator eingefügten Spulenmatte (12) ist, auf den Wicklungsträger (22).

5. Fügeverfahren nach einem der voranstehenden Ansprüche, **dadurch gekennzeichnet,**
**dass** Schritt d) wenigstens einen oder mehrere der Schritte umfasst:
d1) Bereitstellen des Übergabewerkzeugs (26) mit einer ringförmigen Anordnung von radial unbeweglichen oder radial beweglichen Übergabewerkzeug-Nutbegrenzungselementen (48);
d2) Bereitstellen von radial beweglichen Stützfingern (54) axial benachbart zu Nutbegrenzungen der Übergabewerkzeug-Aufnahmenuten (28);
d3) radiales Bewegen der geradlinigen Drahtabschnitte (18) aus den Wicklungsträger-Aufnahmenuten (24) in die Übergabewerkzeug-Aufnahmenuten (28);
d4) radiales Expandieren der Spulenmatte (12) beim Überführen vom Wicklungsträger (22) auf das Übergabewerkzeug (26) mittels radial nach außen bewegter Ausstoßelemente (52);
d5) Übergeben der Spulenmatte (12) unter Beibehaltung der Spulenmattenform und/oder des Spulenmattendurchmessers durch radiales Bewegen von Nutbegrenzungselementen (42, 48) des Wicklungsträgers (22) und des Übergabewerkzeugs (26);
d6) Stützen und/oder Führen der Spulenmatte (12) beim Überführen mittels radial zustellbarer Stützfinger (54);
d7) Halten der Spulenmatte (12) an den Wickelköpfen (16) beim Überführen.

6. Fügeverfahren nach einem der voranstehenden Ansprüche, **dadurch gekennzeichnet,**
**dass** Schritt e) wenigstens einen oder mehrere der Schritte umfasst:
e1) radiales Komprimieren der Spulenmatte (12) beim Überführen auf den Stator (14);
e2) Führen der Spulenmatte (12) beim Überführen mittels Stützfingern (54);
e3) Festhalten und/oder Freigeben von Nutisolierungen (34) beim Überführen der Spulenmatte (12) auf den Stator;
e4) Festklemmen von Nutisolierungen (34) mittels Stützfinger (54);
e5) Festhalten von Nutisolierungen (34) mittels radial beweglicher Nutbegrenzungselemente (48) des Übergabewerkzeugs (26).

7. Fügevorrichtung (10) zum Fügen einer Spulenmatte (12), die durch Wicklungsköpfe (16) verbundene geradlinige Drahtabschnitte (18) aufweist, in nach außen öffnende Statornuten (20) eines Stators (14) eines Außenläufermotors, mit:
einem Wicklungsträger (22), der eine ringförmige Anordnung radial nach außen öffnender Wicklungsträger-Aufnahmenuten (24) aufweist und auf den die Spulenmatte (12) unter Einfügen der geradlinigen Drahtabschnitte (18) in die Wicklungsträger-Aufnahmenuten (24) aufrollbar ist;
und
einem Übergabewerkzeug (26), das eine ringförmige Anordnung nach innen öffnender Übergabewerkzeug-Aufnahmenuten (28) aufweist und das dazu eingerichtet ist, die Spulenmatte (12) von dem Wicklungsträger (22) aufzunehmen und auf den Stator (14) zu übergeben.

8. Fügevorrichtung (10) nach Anspruch 7, **gekennzeichnet durch**
eine geradlinige Halterung (30) mit wenigstens einer Reihe von Zähnen (30a) zum Bereitstellen der Spulenmatte (12) und
eine Aufrolleinrichtung (44) zum Drehen des Wicklungsträgers (22) und zum relativen Bewegen von Wicklungsträger (22) und Halterung (30) zum Aufrollen der Spulenmatte (12) auf den Wicklungsträger (22).

9. Fügevorrichtung (10) nach einem der Ansprüche 7 oder 8, **dadurch gekennzeichnet,**
**dass** der Wicklungsträger (22)
9.1 radial feststehende oder radial bewegliche Wicklungsträger-Nutbegrenzungselemente (42) aufweist und/oder
9.2 radial bewegliche Ausstoßelemente (52) zum radialen Ausstoßen der Spulenmatte (12) zum Überführen auf das Übergabewerkzeug (26) aufweist und/oder
9.3 an einer Wicklungsträger-Handlingseinrichtung (46) gehalten ist, die dazu eingerichtet ist, den Wicklungsträger (22) mit aufgerollter Spulenmatte (12) in das Übergabewerkzeug (26) einzuführen und die Aufnahmenuten (24, 28) des Wicklungsträgers (22) und des Übergabewerkzeugs (26) miteinander zum Überführen der Spulenmatte (12) auszurichten.

10. Fügevorrichtung (10) nach einem der Ansprüche 7 bis 9, **dadurch gekennzeichnet,**
**dass** das Übergabewerkzeug (22)
10.1 radial feststehende oder radial bewegliche Übergabewerkzeug-Nutbegrenzungselemente (48) aufweist; und/oder
10.2 an einer Übergabewerkzeug-Handlingseinrichtung (50) gehalten ist, die dazu eingerichtet ist, das Übergabewerkzeug (26) mit dem Wicklungsträger (22) und dem Stator (14) zur jeweiligen Übergabe der Spulenmatte (12) auszurichten oder
10.3 stationär gehalten ist, wobei Wicklungsträger (22) und Stator-Halterung (32) axial in das Übergabewerkzeug (22) verfahrbar sind.

11. Fügevorrichtung (10) nach einem der Ansprüche 7 bis 10, **gekennzeichnet durch** wenigstens eine ringförmige Anordnung von radial beweglichen Stützfingern (54) zum Stützen und/oder Führen der Spulenmatte (12) beim Überführen von dem Wicklungsträger (22) auf das Übergabewerkzeug (26) und/oder beim Überführen von dem Übergabewerkzeug (26) auf den Stator (14).

12. Fügevorrichtung (10) nach Anspruch 11, **dadurch gekennzeichnet,**
**dass** die Anordnung von Stützfingern (54) dazu eingerichtet ist, beim Überführen der Spulenmatte (12) von dem Übergabewerkzeug (26) auf den Stator (14) in Statornuten (20) eingefügte Nutisolierungen (34) am Stator (14) festzuklemmen und/oder freizugeben.

13. Fügevorrichtung (10) nach einem der Ansprüche 7 bis 12, **gekennzeichnet durch** eine Steuerung (40) mit wenigstens einem Prozessor (40a) und wenigstens einem Speicher (40b), die dazu eingerichtet ist, die Fügevorrichtung (10) zum Durchführen des Fügeverfahrens nach einem der Ansprüche 1 bis 6 anzusteuern.

14. Steuerung (40) für eine Fügevorrichtung (10) nach einem der Ansprüche 7 bis 13, dazu eingerichtet, die Fügevorrichtung (10) zum Durchführen des Fügeverfahrens nach einem der Ansprüche 1 bis 6 anzusteuern.

15. Computerprogramm mit Anweisungen, die eine Fügevorrichtung (10) nach einem der Ansprüche 7 bis 13 dazu veranlassen, das Fügeverfahren nach einem der Ansprüche 1 bis 6 durchzuführen.
